# NEW EUROPEAN PATENT SPECIFICATION

(11) **EP 2 411 443 B2**
(45) Date of publication and mention of the opposition decision: **01.08.2018**
(45) Mention of the grant of the patent: 06.01.2016
(21) Application number: 10709858.4
(22) Date of filing: 24.03.2010
(51) Int. Cl.: C09D 5/03, C08F 283/01, C08G 63/52, C09D 167/06

(54) **PROCESS FOR PREPARING UNSATURATED POLYESTER**
VERFAHREN ZUR HERSTELLUNG VON UNGESÄTTIGTEN POLYESTERN
PROCÉDÉ DE PRÉPARATION DE POLYESTERS INSATURÉS

(30) Priority: 25.03.2009 EP 09156137; 25.03.2009 EP 09156131; 25.03.2009 EP 09156130; 25.03.2009 EP 09156139; 25.03.2009 EP 09156142
(43) Date of publication of application: 01.02.2012
(73) Proprietor: DSM IP Assets B.V., 6411 TE Heerlen (NL)
(72) Inventor: SZKUDLAREK, Marian Henryk, 48527 Nordhorn (DE); JANSEN, Johan Franz Gradus Antonius, NL-6165 AP Geleen (NL); DUYVESTIJN, Stefanus Jacobus, NL-7417 ZR Deventer (NL); SILVESTRE, DI, Silvana Rensina Antonnietta, NL-6129 KB Berg aan de maas (NL)
(74) Representative: DSM Intellectual Property
(86) International application number: PCT/EP2010/053851
(87) International publication number: WO 2010/108966

(56) References cited:
- WO-A1-97/27253
- WO-A2-2007/016303
- BE-A3- 1 010 774
- FR-A- 1 295 841
- FR-A- 1 539 073
- GB-A- 806 730

## Description

The present invention relates to a process for preparing unsaturated polyester resin, suitable to be used in the manufacturing of structural parts, comprising itaconate ester units as reactive unsaturations in the resin.

Unsaturated polyester resin compositions currently applied for obtaining structural parts often contain considerable quantities of styrene as copolymerizable reactive diluent. As a result of the presence of styrene, styrene may escape during the preparation and curing, but also even during the envisaged long-term use thereof, and causes an undesirable odour, and possibly even also toxic effects. Thus there is a desire to reduce the styrene emission. Due to the fact that the unsaturated polyester resin is only copolymerizable, the amount of styrene in styrene containing resins can not be reduced further without detrimentally affecting the mechanical properties of the cured composites. Consequently there is a need for homopolymerizable unsaturated polyester resins. As used herein, an unsaturated polyester resin comprising itaconate ester units as reactive unsaturations is considered homopolymerizable in case at least 25 wt.% of the unsaturated dicarboxylic acid building blocks are capable of homopolymerization, i.e. are itaconic acid building blocks.

It has however been found that homopolymerizable unsaturated polyester resins tend to gel (i.e. to polymerize) during its preparation, in particular when applying the standard UP synthesis procedure in which all the raw materials for the resin are mixed and condensed at higher temperatures.

For unsaturated polyesters to be used in the manufacturing of structural parts, the unsaturated polyesters must be able to free radical polymerise (I.e to cure) after having diluted the resin with reactive diluent. This means that gelation during preparation of the unsaturated polyester resin needs to be avoided.

WO-A-9727253 describes the synthesis of itaconic based powder coating resins. In this publication, the standard UP synthesis procedure, in which all the raw materials for the resin are mixed and condensed at higher temperatures, is not applied. The homopolymerizable itaconic based unsaturated polyesters have been prepared by either using the prepolymer approach, in which a hydroxyl functional polymer or oligomer is modified in the second step with itaconic acid and condensed to low acid values, or by using the anhydride approach, in which hydroxyl functional polymers are modified with itaconic anhydride resulting in high acid value resins. The unsaturated polyesters as described in this patent application, the amount of itaconic acid on the total amount of multifunctional carboxy acids is at most 54%.

FR-A-1295841 discloses the preparation of unsaturated polyester comprising itaconate ester units as reactive unsaturations applying the standard unsaturated polyester synthesis procedure in the presence of hydroquinone. A disadvantage of the use of hydroquinone is the viscosity of the obtained resin is relatively high. Lowering the viscosity of the neat resin can be achieved by producing resin with lower molecular weights. However, this may result in a deterioration of the mechanical properties of the cured object.

The object of the present invention is to provide a process for preparing unsaturated polyester comprising itaconate ester units as reactive unsaturations, in which the standard unsaturated polyester synthesis procedure can be applied and in which the viscosity of the prepared resin can be decreased compared to when using hydroquinone, while maintaining or even improving the mechanical properties of the cured object.

This object has been surprisingly been achieved in that the process comprises reacting at least itaconic acid and/or itaconic anhydride and at least one diol in the presence of 2-methyl hydroquinone and hydroquinone.

An additional advantage of the process of the present invention is that the mechanical properties of a cured object based on a resin prepared with the process according to the invention can be improved, such as tensile strength, tensile modulus, flexural strength, flexural modulus, Barcol hardness and/or HDT.

The process of the present invention preferably comprises:
(i) charging the reactor with itaconic acid and/or itaconic anhydride and optionally other dicarboxylic acids, at least one diol and an inhibitor,
(ii) heating the reactor till a temperature of from 180 to 200 °C until the acid value of the formed unsaturated polyester is below 60 mg KOH/g resin,
(iii) cooling the formed resin, preferably to from 20 to 120 °C, and
(iv) optionally diluting the resin with reactive diluent,
wherein the inhibitor is 2-methyl hydroquinone and hydroquinone.

As used herein, gelation activity factor of an inhibitor is defined as the ratio mass gel particles/(mass liquid + mass gel particles), whereby the masses are in g and determined after the resin preparation, whereby the resin preparation is effected using 100 ppm of inhibitor at the start of the resin synthesis.

In case the gelation activity factor is 0, no gel particles are visually observed in the resin. This visual inspection is an easy way to determine if the gelation activity factor is 0.

Examples of inhibitors with gelation activity factors of 0 are hydroquinone and methyl substituted hydroquinones, such as for example 2-methylhydroquinone.

As used herein, efficiency factor of an inhibitor is defined as the ratio η₅₀₀/η₁₀₀ in which η₅₀₀ is the viscosity, measured at 125 °C using a cone and plate set-up, of a resin prepared with 500 ppm inhibitor and η₁₀₀ is the viscosity, measured at 125 °C using a cone and plate set-up, of a resin prepared with 100 ppm inhibitor.

The process according to the invention is effected in the presence of 2-methyl hydroquinone and hydroquinone.

The invention therefore relates to a process for preparing an unsaturated polyester resin comprising itaconate ester units as reactive unsaturations by reacting at least itaconic acid and/or itaconic anhydride and at least one diol, wherein the process is effected in the presence of 2-methyl hydroquinone and hydroquinone. Preferably, the process comprises:
(i) charging the reactor with itaconic acid and/or itaconic anhydride and optionally other dicarboxylic acids, at least one diol and an inhibitor,
(ii) heating the reactor till a temperature of from 180 to 200°C until the acid value of the formed unsaturated polyester is below 60 mg KOH/g resin,
(iii) cooling the formed resin, preferably to from 20 to 120 °C, and
(iv) optionally diluting the resin with reactive diluent,
wherein the inhibitor is 2-methyl hydroquinone and hydroquinone.

Surprisingly the inventors found a synergistic effect when using a combination of hydroquinone and 2-methyl hydroquinone, very good mechanical properties can be obtained of a cured object based on a resin composition comprising reactive diluent and an unsaturated polyester resin comprising itaconate ester as reactive unsaturations.

Preferably, in the process of the invention the molar ratio of the amount of hydroquinone and 2-methyl hydroquinone is in the range from 0.2 to 5, more preferably in the range from 0.5 to 2.

The process of the present invention is preferably effected in the presence of at least 25 ppm and more preferably at least 50 ppm of inhibitor. The process of the present invention is preferably effected in the presence of at most 2000 ppm, more preferably at most 750 ppm of inhibitor (relative to the amount of raw materials used to prepare the resin).

The unsaturated polyester according to the invention comprises itaconate ester units as building blocks having the following structural formula.

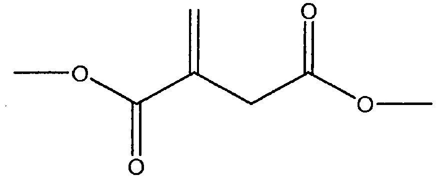

The itaconic ester units (also referred to as itaconic acid building blocks) contain an ethylenic unsaturation that is able to copolymerize with copolymerizable monomer in which the unsaturated polyester may be diluted. The unsaturated polyester according to the invention can be manufactured by polycondensation of at least a diol and itaconic acid or itaconic acid anhydride as unsaturated dicarboxylic acid. The polycondensation may also be effected in the presence of other dicarboxylic acids containing reactive unsaturations, such as for example maleic acid or anhydride and fumaric acid and/or in the presence of saturated aliphatic dicarboxylic acids or anhydrides, like for example oxalic acid, succinic acid, adipic acid, sebacic acid and/or in the presence of aromatic saturated dicarboxylic acids or anhydrides like for example phthalic acid or anhydride and isophthalic acid. In the polymerisation is further used a diol, such as for example 1,2-propylene glycol , ethylene glycol, diethylene glycol, triethylene glycol, 1,3-propanediol, dipropylene glycol, tripropylene glycol, neopentyl glycol, hydrogenated bisphenol-A. or ethoxylated / propoxylated bisphenol A.

According to a preferred embodiment the molecular weight of the diol in the unsaturated polyester resin is in the range from 60 to 250 Dalton. In a preferred embodiment at least part of the diols is selected from either isosorbide or 1,3-propanediol or both, preferably derived from a non fossil source like for example corn.

Preferably the total amount of diacids ranges from 20 to 80 mol % and the total amount of diols ranges from 20 to 80 mol% (in which 100 mol% is sum diols and diacids).

The unsaturated polyester according to the invention is preferably homopolymerizable. In the unsaturated polyester resin according to the invention, preferably at least 25wt.% of the dicarboxylic acid building blocks are itaconic acid building blocks. More preferably, at least 55wt.% of the dicarboxylic acid building blocks in the unsaturated polyester according to the invention are itaconic acid building blocks.

The unsaturated polyester according to the invention is preferably homopolymerizable. Preferably at least 25wt.%, more preferably at least 55 wt.%, of the unsaturated dicarboxylic acid building blocks are itaconic acid building blocks.

In a preferred embodiment, at least part of the itaconic acid or itaconic anhydride is derived from a non-fossil source, for example from corn.

The unsaturated polyester comprising itaconate ester units as reactive unsaturations is preferably composed of from 33 to 66 mol % glycol monomers, from 10 to 66 mol % itaconic acid monomers, from 0 to 65 mol % unsaturated diacid monomers (other than itaconic acid monomers, like for example fumaric and maleic acid monomers) and from 0 to 65 mol % diacids other than unsaturated diacid monomers, preferably from 0 to 50 mol% diacids other than unsaturated diacid monomers.

The acid value of the itaconate containing unsaturated polyester resin is preferably in the range from 30 to 100 mg KOH/g resin, more preferably from 35 to 75 mg KOH/g resin. As used herein, the acid value of the resin is determined titrimetrically according to ISO 2114-2000.

In one embodiment, the molar ratio of hydroxyl end groups and carboxylic acid end groups in the unsaturated polyester resin according to the invention is in the range from 0.33 to 0.9. In another embodiment, the molar ratio of hydroxyl end groups and carboxylic acid end groups in the unsaturated polyester resin according to the invention is in the range from 1.1 to 3.

The hydroxyl value of the itaconate containing unsaturated polyester resin is preferably higher than 25 and more preferably higher than 40 mg KOH/g resin. As used herein, the hydroxyl value of the itaconate containing polyester is determined according to ISO 4629-1996.

Preferably, the molecular weight of the unsaturated polyester comprising itaconate ester units as reactive unsaturations is at least 300 Dalton, preferably at least 500 Dalton and more preferably at least 750 Dalton. Preferably, the molecular weigth Mn of the unsaturated polyester comprising itaconate ester units as reactive unsaturations is at most 10.000 Dalton, more preferably at most 5000 Dalton. The molecular weight (Mn) is determined in tetrahydrofurane using GPC according to ISO 13885-1 employing polystyrene standards and appropriate columns designed for the determination of the molecular weights. In a preferred embodiment of the invention, the molecular weight Mn is in the range from 750 to 5000 Dalton.

The glass transition temperature T_{g} of the unsaturated polyester is preferably at least -70°C and at most 100°C. In case the unsaturated polyester is applied for construction purposes, the glass transition temperature T_{g} of the unsaturated polyester resin present in the resin composition according to the invention is preferably at least -70°C, more preferably at least -50°C and even more preferably at least -30°C. The T_{g} of the unsaturated polyester resin present in the resin composition according to the invention is preferably at most 70°C, more preferably at most 50°C and even more preferably at most 30°C. As used herein, the T_{g} is determined by means of DSC (heating rate 5 °C/min).

The present invention further relates to an unsaturated polyester resin composition comprising unsaturated polyester resin that comprises itaconate ester as reactive unsaturations, 2-methyl hydroquinone and hydroquinone and wherein the molar ratio of the amount of hydroquinone and 2-methyl hydroquinone is in the range from 0.2 to 2, preferably in the range from 0.5 to 2. The unsaturated polyester that comprises itaconate ester as reactive unsaturations is preferably homopolymerizable. In a preferred embodiment, the resin composition comprises homopolymerisable unsaturated polyester resin comprising itaconate ester units, hydroquinone and 2-methylhydroquinone. The amount of hydroquinone and/or 2-methyl hydroquinone is preferably at least 25 ppm, more preferably at least 50 ppm, preferably at most 2000 ppm, more preferably at most 750 ppm (relative to the total resin composition).

In one embodiment, the composition further comprises reactive diluent.

In one embodiment, the unsaturated polyester resin according to the invention can be applied as a powder coating resin. The preparation of powder coating compositions is described by Misev in "Powder Coatings, Chemistry and Technology" (pp. 224-300; 1991, John Wiley) hereby incorporated by reference. Therefore the present invention also relates to a powder coating composition comprising the unsaturated polyester prepared with the process according to the invention. In case the unsaturated polyester according to the invention is applied in a powder coating composition, the glass transition temperature T_{g} of the unsaturated polyester resin is preferably at least 20°C, more preferably at least 25°C and even more preferably at least 30°C and at most 100°C, more preferably at most 80°C and even more preferably at most 60°C.

A common way to prepare a powder coating composition is to mix the separately weight-out components in a premixer, heat the obtained premix, for example in a kneader, preferably in an extruder to obtain an extrudate, cool down the obtained extrudate until it solidifies and crush it into granules or flakes that are further grinded to reduce the particle size followed by appropriate classification to obtain a powder coating composition of the right particle size. Therefore, the invention also relates to a process for the preparation of a powder coating composition according to the invention comprising the steps of:
a. mixing the components of the powder coating composition comprising the unsaturated polyester according to the invention to obtain a premix
b. heating the obtained premix, preferably in an extruder, to obtain an extrudate
c. cooling down the obtained extrudate to obtain a solidified extrudate and
d. breaking the obtained solidified extrudate into smaller particles to obtain the powder coating composition
and preferably comprising the further step of classifying the thus prepared powder particles via a sieve and collect sieve fraction with particle size below 90 mm.

The powder coating composition of the present invention may optionally contain the usual additives, such as for example fillers/pigments, degassing agents, flow agents, or (light) stabilizers. Examples of flow agents include Byk 361 N. Examples of suitable fillers/pigments include metal oxides, silicates, carbonates or sulphates. Examples of suitable stabilizers include UV stabilizers, such as for example phosphonites, thioethers or HALS (hindered amine light stabilizers). Examples of degassing agents include benzoin and cyclohexane dimethanol bisbenzoate. Other additives, such as additives for improving tribo-chargeability may also be added.

In another aspect, the invention relates to a process for coating a substrate comprising the following steps:
1) applying a powder coating composition comprising the unsaturated polyester according to the invention to a substrate such that the substrate is partially or fully coated with a coating.
2) heating the obtained partially or fully coated substrate for such time and to such temperature such that the coating is at least partially cured.

The powder coating composition of the present invention may be applied using the techniques known to the person skilled in the art, for example using electrostatic spray or electrostatic fluidized bed.

In a preferred embodiment of the invention, the process according to the invention further comprises the step of diluting the unsaturated polyester resin comprising itaconate ester units with one or more reactive diluents to obtain a resin composition suitable to be applied for construction purposes. In a preferred embodiment, the unsaturated polyester comprising itaconate ester units is diluted in styrene, dimethyl itaconate and/or a methacrylate.

The amount of reactive diluent in such a resin composition according to the invention is usually in the range from 5 to 75 wt.%, preferably in the range from 20 to 60 wt.%, most preferably in the range from 30 to 50 wt.% (relative to the total amount of unsaturated polyester and reactive diluent).

The diluent will be applied, for instance, for lowering of the viscosity of the resin composition in order to make handling thereof more easy. For clarity purpose, a reactive diluent is a diluent that is able to copolymerize with the unsaturated polyester resin.. Ethylenically unsaturated compounds can be advantageously used as reactive diluent. Preferably, styrene, dimethyl itaconate and/or a methacrylate containing compound is used as reactive diluent. In one embodiment of the invention, styrene, α-methylstyrene, 4-methylstyrene, (meth)acrylate containing compounds, N-vinylpyrrolidone and/or N-vinylcaprolactam is used as reactive diluent. In this embodiment, styrene and/or (meth)acrylate containing compound is preferably used as reactive diluent and more preferably (meth)acrylate containing compound is used as reactive diluent. In another embodiment, itaconic acid or an ester of itaconic acid is used as reactive diluent. In a more preferred embodiment, the reactive diluent comprises an ester of itaconic acid and at least another ethylenically unsaturated compound, such as for example styrene, α-methylstyrene, , 4-methylstyrene, (meth)acrylates, N-vinylpyrrolidone and/or N-vinylcaprolactam. In this embodiment, the resin composition preferably comprises an ester of itaconic acid as reactive diluent and styrene as reactive diluent or a methacrylate containing compound as reactive diluent. A preferred ester of itaconic acid is dimethyl itaconate.

The resin composition preferably further comprises a co-initiator for the radical curing of the resin composition, in an amount of from 0.00001 to 10 wt% (relative to the total amount of unsaturated polyester and reactive diluent). A preferred co- initiator is an amine or a transition metal compound.

The amine co-initiator that may be present in the composition is preferably an aromatic amine and even more preferably a tertiary aromatic amine. Suitable accelerators include N,N-dimethylaniline, N,N-diethylaniline; toluidines and xylidines such as N,N-diisopropanol-para-toluidine; N,N-dimethyl-p-toluidine; N,N-bis(2-hydroxyethyl)xylidine and -toluidine. The amount of amine in the resin composition (relative to the total amount of unsaturated polyester and reactive diluent). is generally at least 0.00001 wt.% and preferably at least 0.01 wt.% and more preferably at least 0.1 wt.%. Generally, the amount of amine in the resin composition is at most 10 wt.%, preferably at most 5 wt.%.

Examples of suitable transition metal compounds as co-initiator are compounds of a transition metal with an atomic number of in the range from 22 to 29 or with an atomic number in the range from 38 to 49 or with an atomic number in the range from 57 to 79, such as vanadium, iron, manganese, copper, nickel, molybdenum, tungsten, cobalt, chromium compounds. Preferred transition metals are V, Cu, Co, Mn and Fe.

After having diluted the unsaturated polyester according to the invention with reactive diluent, additional radical inhibitors may be added. These radical inhibitors are preferably chosen from the group of phenolic compounds, benzoquinones, hydroquinones, catechols, stable radicals and/or phenothiazines. The amount of radical inhibitor that can be added may vary within rather wide ranges, and may be chosen as a first indication of the gel time as is desired to be achieved.

Suitable examples of radical inhibitors that can be used in the resin compositions according to the invention are, for instance, 2-methoxyphenol, 4-methoxyphenol, 2,6-di-t-butyl-4-methylphenol, 2,6-di-t-butylphenol, 2,4,6-trimethyl-phenol, 2,4,6-tris-dimethylaminomethyl phenol, 4,4'-thio-bis(3-methyl-6-t-butylphenol), 4,4'-isopropylidene diphenol, 2,4-di-t-butylphenol, 6,6'-di-t-butyl-2,2'-methylene di-p-cresol, hydroquinone, 2-methylhydroquinone, 2-t-butylhydroquinone, 2,5-di-t-butylhydroquinone, 2,6-di-t-butylhydroquinone, 2,6-dimethylhydroquinone , 2,3,5-trimethylhydroquinone, catechol, 4-t-butylcatechol, 4,6-di-t-butylcatechol, benzoquinone, 2,3,5,6-tetrachloro-1,4-benzoquinone, methylbenzoquinone, 2,6-dimethylbenzoquinone, napthoquinone, 1-oxyl-2,2,6,6-tetramethylpiperidine, 1-oxyl-2,2,6,6-tetramethylpiperidine-4-ol (a compound also referred to as TEMPOL), 1-oxyl-2,2,6,6-tetramethylpiperidine-4-one (a compound also referred to as TEMPON), 1-oxyl-2,2,6,6-tetramethyl-4-carboxyl-piperidine (a compound also referred to as 4-carboxy-TEMPO), 1-oxyl-2,2,5,5-tetramethylpyrrolidine, 1-oxyl-2,2,5,5-tetramethyl-3-carboxylpyrrolidine (also called 3-carboxy-PROXYL), galvinoxyl, aluminium-N-nitrosophenyl hydroxylamine, diethylhydroxylamine, phenothiazine and/or derivatives or combinations of any of these compounds.

Advantageously, the amount of radical inhibitor in the resin composition according to the invention is in the range from 0,0001 to 10 % by weight (relative to the total amount of unsaturated polyester and reactive diluent). More preferably, the amount of inhibitor in the resin composition is in the range from 0,001 to 1 % by weight. The skilled man quite easily can assess, in dependence of the type of inhibitor selected, which amount thereof leads to good results according to the invention.

The present invention further relates to a process for radically curing the resin composition according to the invention, wherein the curing is effected by adding an initiator to the resin composition as described above. Preferably, the curing is effected at a temperature in the range from -20 to +200 °C, The initiator is a photoinitiator, a thermal initiator and/or redox initiator. Preferably, the initiator is a peroxide compound.

As meant herein, a photo initiator is capable of initiating curing upon irradiation Photo initiation is understood to be curing using irradiation with light of a suitable wavelength (photo irradiation). This is also referred to as light cure.

A photo-initiating system may consist of a photo initiator as such, or may be a combination of a photo initiator and a sensitizer, or may be a mixture of photo initiators, optionally in combination with one or more sensitizers.

The photo initiating system that can be used in the context of the present invention can be chosen from the large group of photo-initiating systems known to the skilled person. A vast number of suitable photo initiating systems, can be found in, for instance, Volume 3 of "Chemistry and Technology of UV and EB Formulations", 2nd Edition, by K. Dietliker and J. V. Crivello (SITA Technology, London; 1998).

The thermal initiator can be selected from azo compounds like for example azo isobutyronitril (AIBN), C-C labile compounds like for example benzopinacole, peroxides, and mixtures thereof. The thermal initiator is preferably an organic peroxide, or a combination of two or more organic peroxides.

The redox initiator is preferably an organic peroxide in combination with at least one of the above mentioned co-initiators. Examples of suitable peroxides are, for instance, hydroperoxides , peroxy carbonates (of the formula -OC(O)OO-), peroxyesters (of the formula -C(O)OO-), diacylperoxides (of the formula -C(O)OOC(O)-), dialkylperoxides (of the formula -OO-), etc.

The present invention further also relates to cured objects or structural parts prepared from unsaturated polyester resin compositions as described above, by curing with an initiator as described above. As used herein, structural resin compositions are capable of providing structural parts. Generally such resin compositions are non-aqueous systems. They contain at most 5% by weight of water, mainly resulting from the reactions during resin preparation. As meant herein, structural parts are considered to have a thickness of at least 0.5 mm and appropriate mechanical properties. End segments where the resin compositions according to the present invention can be applied are for example automotive parts, boats, chemical anchoring, roofing, construction, containers, relining, pipes, tanks, flooring and windmill blades.

The present invention in particular relates to cured objects or structural parts obtained by curing of a resin composition according to the invention with an initiator, preferably comprising a peroxide. According to one embodiment, the curing is preferably effected by moulding, more preferably the curing is effected by compression moulding to obtain in particular a SMC or BMC part. The moulding is preferably effected at a temperature of at least 130°C, more preferably at least 140°C; and at a temperature of at most 170°C, more preferably of at most 160°C.

The invention is now demonstrated by means of a series of examples and comparative examples. All examples are supportive of the scope of claims. The invention, however, is not restricted to the specific embodiments as shown in the examples.

### Standard Resin synthesis

The diols, diacids and/or anhydrides, optionally inhibitor and catalyst were charged in a vessel equipped with a packed column, a temperature measurement device and inert gas inlet. The mixture was heated slowly by usual methods to 200 °C. The mixture was kept at 200 °C until the distillation of water stopped. The packed column was removed and the mixture was kept under reduced pressure until the acid value reached a value below 50 mg KOH/g resin. Then the vacuum was relieved with inert gas, and the mixture was cooled down to 130 °C or lower. The solid UP resins were obtained in this way. Next the solid resin was dissolved in a reactive diluent at temperatures below 80 °C.

### Monitoring of curing

Curing was monitored by means of standard gel time equipment. This is intended to mean that both the gel time (T_{gel} or T_{25->35°C}) and peak time (Tₚₑₐₖ or T_{25->peak}) were determined by exotherm measurements according to the method of DIN 16945 when curing the resin with the peroxide as indicated.

### Mechanical property determination

For the determination of mechanical properties 4 mm castings were prepared. After 16 hrs the castings were released from the mould and postcured using 24hr at 60C followed by 24hr at 80C.

Mechanical properties of the cured objects were determined according to ISO 527-2. The Heat Distortion Temperature (HDT) was measured according to ISO 75-A.

The viscosity of the dissolved resin was determined at 23°C using a physica instrument. The viscosity of the neat resin was determined at 125°C using a cone and plate setup (Brookfield CAP200+ cone 3).

### Examples 1 to 13 (Ex 1 to Ex 13)

Resins were prepared via the standard synthesis procedure with the ingredients and inhibitors as listed in table 1.

**Table 1**

| | Ex 1 | Ex 2 | Ex 3 | Ex 4 | Ex 5 | Ex 6 (no inhibitor added) | Ex 7 | Ex 8 |
|---|---|---|---|---|---|---|---|---|
| Itaconic acid (g) | 732 | 732 | 732 | 732 | 732 | 732 | 732 | 732 |
| Propylene glycol (g) | 471 | 471 | 471 | 471 | 471 | 471 | 471 | 471 |
| | | | | | | | | |
| 2-methyl hydroquinone | 0.12 (100ppm) | | | | | | | |
| Hydroquinone | | 0.12 (100ppm) | | | | | | |
| t-butyl hydroquinone | | | 0.12 (100ppm) | | | | | |
| Tempol | | | | 0.12 (100ppm) | | | | |
| p-methoxy phenol | | | | | 0.12 (100ppm) | | | |
| Benzoquinone | | | | | | | 0.12 (100ppm) | |
| 2-methyl benzoquinone | | | | | | | | 0.12 (100ppm) |
| Acid value of the resin (mgKOH/g resin) | 44 | 45 | 45 | 45 | 45 | 45 | 45 | 45 |
| Viscosity@ 125°C (cone and plate) dPa.s | 3.62 | 9.21 | Gel | Gel | Gel | Gel | Gel | Gel |
| Gelation Activity factor | 0 | 0 | 1 | 1 | 1 | Not relevant | 1 | 1 |

These experiments clearly show the fact that employing itaconates in the preparation of unsaturated polyesters the inhibitors should be inhibitors with a low gelation activity factor as employing inhibitors with a high gelation activity factor resulted in a gel which can no longer be used. Furthermore, comparing Ex 1 with Ex 2 shows that the 2-methyl hydroquinone is a more efficient inhibitor compared to hydroquinone because the viscosity of the neat resin at 125 °C is much lower.

Resins were prepared via the standard synthesis procedure with the listed ingredients in table 2. The resins were cured using 0.5 wt% of a cobalt solution (NL-49P) followed by 2 wt% Trigonox 44B as peroxide. The curing was monitored with the gel time equipment.

**Table 2**

| | Ex 9 | Ex 10 | Ex 11 | Ex 12 | Ex 13 |
|---|---|---|---|---|---|
| Itaconic acid (g) | 732 | 732 | 732 | 732 | 732 |
| Propylene glycol (g) | 471 | 471 | 471 | 471 | 471 |
| | | | | | |
| Hydroquinone | 0.12 (100 ppm) | 0.6 (500 ppm) | | | 0.3 (250 ppm) |
| 2-methyl hydroquinone | | | 0.12 (100 ppm) | 0.6 (500 ppm) | 0.3 (250 ppm) |
| | | | | | |
| Viscosity @ 125°C (cone and plate) dPa.s | 9.21 | 4.25 | 3.62 | 2.43 | 2.05 |
| Acid value of the resin (mgKOH/g resin) | 45 | 44 | 44 | 44 | 46 |
| Efficiency factor = η ₅₀₀ₚₚₘ/η₁₀₀ppm | | 0.46 | | 0.67 | |
| | | | | | |
| Reactive diluent | styrene | styrene | Styrene | styrene | styrene |
| Solid content % | 65 | 65 | 65 | 65 | 65 |
| Viscosity @23°C mPa.s | 1518 | 816 | 839 | 747 | 623 |
| | | | | | |
| Tensile strength (MPa) | 46 | 58 | 72 | 79 | 74 |
| Tensile modulus (GPa) | 2.1 | 2.6 | 3.4 | 3.4 | 3.8 |
| Elongation at break (%) | 4.7 | 4.3 | 2.9 | 4 | 2.7 |
| Flexural strength (MPa) | 73 | 87 | 105 | 106 | 117 |
| Flexural modulus (GPa) | 2.3 | 2.8 | 3.2 | 3.3 | 3.8 |
| Barcol Hardness | 27 | 35 | 34 | 40 | 48 |
| HDT (°C) | 77 | 85 | 96 | 95 | 103 |

Ex 13 is the only example according to the invention. These examples show that hydroquinone has a medium efficiency factor (= η₅₀₀ₚₚₘ/η₁₀₀ₚₚₘ), and 2-methyl hydroquinone has a high efficiency factor. Furthermore Ex 11 vs Ex 9 or Ex 12 vs Ex 10 shows that an inhibitor with a high efficiency factor results in a resin with a lower viscosity, both as neat resin as diluted resin, as well as an improvement in mechanical properties such as tensile strength, tensile modulus, flexural strength and modulus, barcol hardness and thermal stability (as indicated by HDT). Furthermore Ex 13 compared to Ex 10 and Ex 12 shows that there is a synergistic effect regarding decrease of viscosity and further improvement of mechanical properties as exemplified by the thermal stability (HDT), when using a combination of inhibitors with different efficiency factors, i.e. one inhibitor with a high (0.55-1) and one inhibitor with a medium (0.3-0.55) efficiency factor.

## Claims

1. A process for preparing an unsaturated polyester resin comprising itaconate ester units as reactive unsaturations by reacting at least itaconic acid and/or itaconic anhydride and at least one diol, wherein the process is effected in the presence of 2-methyl hydroquinone, and hydroquinone.

2. The process according to claim 1, wherein the process comprises the steps of:
(i) charging the reactor with itaconic acid and/or itaconic anhydride and the at least one diol and the 2-methyl hydroquinone and the hydroquinone,
(ii) heating the reactor till a temperature of from 180 to 200 °C until the acid value of the formed unsaturated polyester is below 60 mg KOH/g resin,
(iii) cooling the formed resin to from 20 to 120 °C.

3. The process according to any one of the preceding claims wherein the amount of the 2-methyl hydroquinone is at least 25 ppm and at most 2000 ppm, relative to the amount of raw materials used to prepare the unsaturated polyester resin comprising itaconate ester units as reactive unsaturations.

4. The process according to any one of the preceding claims wherein the amount of the 2-methyl hydroquinone is at least 25 ppm and at most 750 ppm, relative to the amount of raw materials used to prepare the unsaturated polyester resin comprising itaconate ester units as reactive unsaturations.

5. The process according to any one of the preceding claims wherein the unsaturated polyester resin comprising itaconate ester units as reactive unsaturations is composed of:
i) from 33 to 66 mol % glycol monomers,
ii) from 10 to 66 mol % itaconic acid monomers,
iii) from 0 to 65 mol % unsaturated diacid monomers other than itaconic acid monomers, and
iv) from 0 to 65 mol % diacids other than unsaturated diacid monomers.

6. The process according to any one of the preceding claims wherein the unsaturated polyester resin comprising itaconate ester units as reactive unsaturations has an acid value as determined titrimetrically according to ISO 2114-2400, in the range from 30 to 100 mg KOH/g resin.

7. The process according to any one of the preceding claims wherein the unsaturated polyester resin comprising itaconate ester units as reactive unsaturations has a hydroxyl value as determined titrimetrically according to ISO 4629-1996, higher than 25 mg KOH/g resin.

8. The process according to any one of the preceding claims wherein the unsaturated polyester resin comprising itaconate ester units as reactive unsaturations has a Mn as determined in tetrahydrofurane using GPC according to ISO 13885-1 employing polystyrene standards, of at least 750 and of at most 10000 Dalton.

9. The process according to any one of the preceding claims wherein the unsaturated polyester resin comprising itaconate ester units as reactive unsaturations has a glass transition temperature as determined by means of DSC at a heating rate of 5 °C/min, of at least -70 and of at most 100 °C.

10. The process according to any one of the preceding claims, wherein the molar ratio of the amount of hydroquinone and 2-methyl hydroquinone is in the range from 0.2 to 5.

11. The process according to any one of claims 1-9, wherein the molar ratio of the amount of hydroquinone and 2-methyl hydroquinone is in the range from 0.5 to 2.

12. The process according to any one of the proceeding claims, wherein at least 25 wt.% of the unsaturated dicarboxylic acid building blocks of the unsaturated polyester resin comprising itaconate ester units as reactive unsaturations, are itaconic acid building blocks.

13. A resin composition comprising an unsaturated polyester resin comprising itaconate ester units as reactive unsaturations, 2-methyl hydroquinone and hydroquinone and wherein the molar ratio of the amount of hydroquinone and 2-methyl hydroquinone is in the range from 0.2 to 2.

14. The resin composition according to claim 13 wherein the amount of the 2-methyl hydroquinone is at least 25 ppm and at most 2000 ppm, relative to the total resin composition.

15. The resin composition according to claim 13 wherein the amount of the 2-methyl hydroquinone is at least 25 ppm and at most 750 ppm, relative to the total resin composition.

16. The resin composition according to any one of claims 13-15, further comprising an initiator.

17. The resin composition according to claim 16 wherein the initiator is a peroxide.

18. The resin composition according to any one of claims 13-17, wherein at least 25 wt.% of the unsaturated dicarboxylic acid building blocks of the unsaturated polyester resin comprising itaconate ester units as reactive unsaturations, are itaconic acid building blocks.

19. The resin composition according to anyone of claims 13-18 further comprising a reactive diluent which is able to copolymerize with the unsaturated polyester resin comprising itaconate ester units as reactive unsaturations.

20. A cured object or structural part obtained from a resin composition according to anyone of claims 13-19 by curing with an initiator.

21. The cured object or structural part according to claim 20, wherein the initiator comprises a peroxide.

22. Use of the cured object or structural part of claim 20 or claim 21 in automotive parts, boats, chemical anchoring, roofing, construction, containers, relining, pipes, tanks, flooring or windmill blades.

23. A powder coating composition comprising a resin composition according to any one of claims 13-19.

24. The powder coating composition according to claim 23 wherein the unsaturated polyester resin comprising itaconate ester units as reactive unsaturations has a glass transition temperature as determined by means of DSC at a heating rate of 5 °C/min, of at least 20 and of at most 100 °C.

25. A process for coating a substrate with a powder coating composition according to any one of claims 23-24, comprising the steps of:
1) applying the powder coating composition to a substrate such that the substrate is partially or fully coated with a coating,
2) heating the obtained partially or fully coated substrate for such time and to such temperature such that the coating is at least partially cured.

## Patentansprüche

1. Verfahren zum Herstellen eines ungesättigten Polyesterharzes, das Itaconatestereinheiten als reaktionsfähige Unsättigungen umfasst, durch Umsetzen von wenigstens Itaconsäure und/oder Itaconsäureanhydrid und wenigstens einem Diol, wobei das Verfahren in Gegenwart von 2-Methylhydrochinon und Hydrochinon durchgeführt wird.

2. Verfahren gemäß Anspruch 1, wobei das Verfahren folgende Schritte umfasst:
(i) Beladen des Reaktors mit Itaconsäure und/oder Itaconsäureanhydrid und dem wenigstens einen Diol und dem 2-Methylhydrochinon und dem Hydrochinon,
(ii) Erhitzen des Reaktors auf eine Temperatur von 180 bis 200 °C, bis der Säurewert des gebildeten ungesättigten Polyesters unter 60 mg KOH/g Harz beträgt,
(iii) Abkühlen des gebildeten Harzes auf 20 bis 120 °C.

3. Verfahren gemäß einem der vorstehenden Ansprüche, wobei die Menge des 2-Methylhydrochinons wenigstens 25 ppm und höchstens 2000 ppm bezogen auf die Menge der zum Herstellen des ungesättigten Polyesterharzes, das Itaconatestereinheiten als reaktionsfähige Unsättigungen umfasst, verwendeten Ausgangsmaterialien beträgt.

4. Verfahren gemäß einem der vorstehenden Ansprüche, wobei die Menge des 2-Methylhydrochinons wenigstens 25 ppm und höchstens 750 ppm bezogen auf die Menge der zum Herstellen des ungesättigten Polyesterharzes, das Itaconatestereinheiten als reaktionsfähige Unsättigungen umfasst, verwendeten Ausgangsmaterialien beträgt.

5. Verfahren gemäß einem der vorstehenden Ansprüche, wobei das ungesättigte Polyesterharz, das Itaconatestereinheiten als reaktionsfähige Unsättigungen umfasst, zusammengesetzt ist aus:
i) von 33 bis 66 mol-% Glycerolmonomeren,
ii) von 10 bis 66 mol-% Itaconsäuremonomeren,
iii) von 0 bis 65 mol-% ungesättigten Disäuremonomeren, die von Itaconsäuremonomeren verschieden sind, und
iv) von 0 bis 65 mol-% Disäuren, die von ungesättigten Disäuremonomeren verschieden sind.

6. Verfahren gemäß einem der vorstehenden Ansprüche, wobei das ungesättigte Polyesterharz, das Itaconatestereinheiten als reaktionsfähige Unsättigungen umfasst, einen Säurewert wie titrimetrisch nach ISO 2114-2400 bestimmt in dem Bereich von 30 bis 100 mg KOH/g Harz aufweist.

7. Verfahren gemäß einem der vorstehenden Ansprüche, wobei das ungesättigte Polyesterharz, das Itaconatestereinheiten als reaktionsfähige Unsättigungen umfasst, einen Hydroxywert wie titrimetrisch nach ISO 4629-1996 bestimmt von höher als 25 mg KOH/g Harz aufweist.

8. Verfahren gemäß einem der vorstehenden Ansprüche, wobei das ungesättigte Polyesterharz, das Itaconatestereinheiten als reaktionsfähige Unsättigungen umfasst, ein Mn wie mittels GPC in Tetrahydrofuran nach ISO 13885-1 unter Verwendung von Polystyrolstandards bestimmt von wenigstens 750 und höchstens 10000 Dalton aufweist.

9. Verfahren gemäß einem der vorstehenden Ansprüche, wobei das ungesättigte Polyesterharz, das Itaconatestereinheiten als reaktionsfähige Unsättigungen umfasst, eine Glasübergangstemperatur wie durch DSC mit einer Heizrate von 5 °C/min bestimmt von wenigstens -70 und höchstens 100 °C aufweist.

10. Verfahren gemäß einem der vorstehenden Ansprüche, wobei das molare Verhältnis der Menge von Hydrochinon und 2-Methylhydrochinon in dem Bereich von 0,2 bis 5 liegt.

11. Verfahren gemäß einem der vorstehenden Ansprüche 1-9, wobei das molare Verhältnis der Menge von Hydrochinon und 2-Methylhydrochinon in dem Bereich von 0,5 bis 2 liegt.

12. Verfahren gemäß einem der vorstehenden Ansprüche, wobei wenigstens 25 Gew.-% der ungesättigten Dicarbonsäure-Baueinheiten des ungesättigten Polyesterharzes, das Itaconatestereinheiten als reaktionsfähige Unsättigungen umfasst, Itaconsäure-Baueinheiten sind.

13. Harzzusammensetzung, umfassend ein ungesättigtes Polyesterharz, das Itaconatestereinheiten als reaktionsfähige Unsättigungen, 2-Methylhydrochinon und Hydochinon umfasst, und wobei das molare Verhältnis der Menge von Hydrochinon und 2-Methylhydrochinon in dem Bereich von 0.2 bis 2 liegt.

14. Harzzusammensetzung gemäß Anspruch 13, wobei die Menge des 2-Methylydrochinons wenigstens 25 ppm und höchstens 2000 ppm bezogen auf die gesamte Harzzusammensetzung beträgt.

15. Harzzusammensetzung gemäß Anspruch 13, wobei die Menge des 2-Methylhydrochinons wenigstens 25 ppm und höchstens 750 ppm bezogen auf die gesamte Harzzusammensetzung beträgt.

16. Harzzusammensetzung gemäß einem der Ansprüche 13-15, ferner umfassend einen Initiator.

17. Harzzusammensetzung gemäß Anspruch 16, wobei der Initiator ein Peroxid ist.

18. Harzzusammensetzung gemäß einem der Ansprüche 13-17, wobei wenigstens 25 Gew.-% der ungesättigten Dicarbonsäure-Baueinheiten des ungesättigten Polyesterharzes, das Itaconatestereinheiten als reaktionsfähige Unsättigungen umfasst, Itaconsäure-Baueinheiten sind.

19. Harzzusammensetzung gemäß einem der Ansprüche 13-18, ferner umfassend ein reaktives Verdünnungsmittel, das fähig ist, mit dem ungesättigten Polyesterharz, das Itaconatestereinheiten als reaktionsfähige Unsättigungen umfasst, zu copolymerisieren.

20. Gehärteter Gegenstand oder Strukturteil, erhalten aus einer Harzzusammensetzung gemäß einem der Ansprüche 13-19 durch Härten mit einem Initiator.

21. Gehärteter Gegenstand oder Strukturteil gemäß Anspruch 20, wobei der Initiator ein Peroxid umfasst.

22. Verwendung des gehärteten Gegenstands oder Strukturteils gemäß Anspruch 20 oder 21 in Automobilteilen, Booten, chemischer Verankerung, Bedachung, Bauwerk, Behältern, Nachverkleidung, Rohren, Tanks, Bodenbelag oder Windradflügeln.

23. Pulverbeschichtungszusammensetzung, umfassend eine Harzzusammensetzung gemäß einem der Ansprüche 13-19.

24. Pulverbeschichtungszusammensetzung gemäß Anspruch 23, wobei das ungesättigte Polyesterharz, das Itaconatestereinheiten als reaktionsfähige Unsättigungen umfasst, eine Glasübergangstemperatur wie durch DSC mit einer Heizrate von 5 °C/min bestimmt von wenigstens 20 und höchstens 100 °C aufweist.

25. Verfahren zum Beschichten eines Substrats mit einer Pulverbeschichtungszusammensetzung gemäß einem der Ansprüche 23-24, umfassend die Schritte:
1) Aufbringen der Pulverbeschichtungszusammensetzung auf ein Substrat, so dass das Substrat teilweise oder vollständig mit der Beschichtung beschichtet ist,
2) Härten des erhaltenen teilweise oder vollständig beschichteten Substrats für eine solche Zeit und bei einer solchen Temperatur, dass die Beschichtung wenigstens teilweise gehärtet wird.

## Revendications

1. Procédé pour la préparation d'une résine de polyester insaturé comprenant des motifs de type ester de type itaconate en tant qu'insaturations réactives par réaction au moins d'acide itaconique et/ou d'anhydride itaconique et d'au moins un diol, le procédé étant effectué en présence de 2-méthylhydroquinone et d'hydroquinone.

2. Procédé selon la revendication 1, le procédé comprenant les étapes consistant à :
(i) charger dans le réacteur de l'acide itaconique et/ou de l'anhydride itaconique et l'au moins un diol et la 2-méthylhydroquinone et d'hydroquinone,
(ii) chauffer le réacteur jusqu'à une température de 180 à 200 °C jusqu'à ce que l'indice d'acide du polyester insaturé formé soit au-dessous de 60 mg de KOH/g de résine,
(iii) refroidir la résine formée à 20 à 120 °C.

3. Procédé selon l'une quelconque des revendications précédentes dans lequel la quantité de 2-méthylhydroquinone est d'au moins 25 ppm et d'au maximum 2000 ppm, par rapport à la quantité de matières premières utilisées pour préparer la résine de polyester insaturé comprenant des motifs de type ester de type itaconate en tant qu'insaturations réactives.

4. Procédé selon l'une quelconque des revendications précédentes dans lequel la quantité de 2-méthylhydroquinone est d'au moins 25 ppm et d'au maximum 750 ppm, par rapport à la quantité de matières premières utilisées pour préparer la résine de polyester insaturé comprenant des motifs de type ester de type itaconate en tant qu'insaturations réactives.

5. Procédé selon l'une quelconque des revendications précédentes dans lequel la résine de polyester insaturé comprenant des motifs de type ester de type itaconate en tant qu'insaturations réactives est composée de :
i) de 33 à 66 % en mole de monomères de type glycol,
ii) de 10 à 66 % en mole monomères de type acide itaconique,
iii) de 0 à 65 % en mole de monomères de type diacide insaturé autres que les monomères de type acide itaconique et
iv) de 0 à 65 % en mole de diacides autres que des monomères de type diacide insaturé.

6. Procédé selon l'une quelconque des revendications précédentes dans lequel la résine de polyester insaturé comprenant des motifs de type ester de type itaconate en tant qu'insaturations réactives a un indice d'acide, tel que déterminé par titrimétrie selon la norme ISO 2114-2400, dans la plage de 30 à 100 mg de KOH/g de résine.

7. Procédé selon l'une quelconque des revendications précédentes dans lequel la résine de polyester insaturé comprenant des motifs de type ester de type itaconate en tant qu'insaturations réactives a un indice d'hydroxyle, tel que déterminé par titrimétrie selon la norme ISO 4629-1996, supérieur à 25 mg de KOH/g de résine.

8. Procédé selon l'une quelconque des revendications précédentes dans lequel la résine de polyester insaturé comprenant des motifs de type ester de type itaconate en tant qu'insaturations réactives a une Mn, telle que déterminée dans du tétrahydrofurane à l'aide de la CPG selon la norme ISO 13885-1 employant des étalons de polystyrène, d'au moins 750 et d'au maximum 10000 Daltons.

9. Procédé selon l'une quelconque des revendications précédentes dans lequel la résine de polyester insaturé comprenant des motifs de type ester de type itaconate en tant qu'insaturations réactives a une température de transition vitreuse, telle que déterminée au moyen de la DSC à une vitesse de chauffage de 5 °C/min, d'au moins - 70 et d'au maximum 100 °C.

10. Procédé selon l'une quelconque des revendications précédentes, dans lequel le rapport molaire des quantités d'hydroquinone et de 2-méthylhydroquinone est dans la plage de 0,2 à 5.

11. Procédé selon l'une quelconque des revendications 1 à 9, dans lequel le rapport molaire des quantités d'hydroquinone et de 2-méthylhydroquinone est dans la plage de 0,5 à 2.

12. Procédé selon l'une quelconque des revendications précédentes, dans lequel au moins 25 % en poids des éléments constitutifs de type acide dicarboxylique insaturé de la résine de polyester insaturé comprenant des motifs de type ester de type itaconate en tant qu'insaturations réactives sont des éléments constitutifs de type acide itaconique.

13. Composition de résine comprenant une résine de polyester insaturé comprenant des motifs de type ester de type itaconate en tant qu'insaturations réactives la 2-méthylhydroquinone et l'hydroquinone et dans laquelle le rapport molaire des quantités d'hydroquinone et de 2-méthylhydroquinone est dans la plage de 0,2 à 2.

14. Composition de résine selon la revendication 13 dans laquelle la quantité de 2-méthylhydroquinone est d'au moins 25 ppm et d'au maximum 2000 ppm, par rapport à la composition de résine totale.

15. Composition de résine selon la revendication 13 dans laquelle la quantité de 2-méthylhydroquinone est d'au moins 25 ppm et d'au maximum 750 ppm, par rapport à la composition de résine totale.

16. Composition de résine selon l'une quelconque des revendications 13 à 15, comprenant en outre un initiateur.

17. Composition de résine selon la revendication 16 dans laquelle l'initiateur est un peroxyde.

18. Composition de résine selon l'une quelconque des revendications 13 à 17, dans laquelle au moins 25 % en poids des éléments constitutifs de type acide dicarboxylique insaturé de la résine de polyester insaturé comprenant des motifs de type ester de type itaconate en tant qu'insaturations réactives sont des éléments constitutifs de type acide itaconique.

19. Composition de résine selon l'une quelconque des revendications 13 à 18 comprenant en outre un diluant réactif qui peut copolymériser avec la résine de polyester insaturé comprenant des motifs de type ester de type itaconate en tant qu'insaturations réactives.

20. Objet durci ou pièce de structure obtenus à partir d'une composition de résine selon l'une quelconque des revendications 13 à 19 par durcissement avec un initiateur.

21. Objet durci ou pièce de structure selon la revendication 20, l'initiateur comprenant un peroxyde.

22. Utilisation de l'objet durci ou de la pièce de structure selon la revendication 20 ou la revendication 21 dans des pièces pour véhicules automobiles, des bateaux, l'ancrage chimique, la couverture, la construction, des récipients, le regarnissage, des tuyaux, des cuves, le revêtement de sols ou des pales d'éolienne.

23. Composition de revêtement en poudre comprenant une composition de résine selon l'une quelconque des revendications 13 à 19.

24. Composition de revêtement en poudre selon la revendication 23 dans laquelle la résine de polyester insaturé comprenant des motifs de type ester de type itaconate en tant qu'insaturations réactives a une température de transition vitreuse, telle que déterminée au moyen de la DSC à une vitesse de chauffage de 5 °C/min, d'au moins 20 et d'au maximum 100 °C.

25. Procédé pour le revêtement d'un substrat avec une composition de revêtement en poudre selon l'une quelconque des revendications 23 et 24, comprenant les étapes consistant à :
1) appliquer la composition de revêtement en poudre sur un substrat de façon telle que le substrat est partiellement ou totalement revêtu d'un revêtement,
2) chauffer le substrat partiellement ou totalement revêtu obtenu pendant une durée et à une température telles que le revêtement est au moins partiellement durci.
